# EUROPEAN PATENT SPECIFICATION

(11) **EP 0 647 310 B1**
(45) Date of publication and mention of the grant of the patent: **22.10.1997**
(21) Application number: 93913400.3
(22) Date of filing: 18.06.1993
(51) Int. Cl.: G01B 11/30, G01N 21/45

(54) **METHOD OF AN APPARATUS FOR INTERFEROMETRICALLY INSPECTING A SURFACE OF AN OBJECT**
VERFAHREN UND VORRICHTUNG ZUR INTERFEROMETRISCHEN INSPEKTION EINER OBERFLÄCHE EINES OBJEKTES
PROCEDE ET APPAREIL POUR CONTROLER LA SURFACE D'UN OBJET PAR INTERFEROMETRIE

(30) Priority: 22.06.1992 GB 9213159
(43) Date of publication of application: 12.04.1995
(73) Proprietor: BRITISH TECHNOLOGY GROUP LIMITED, London SE1 6BU (GB)
(72) Inventor: MONTGOMERY, Paul, Christopher, F-34090 Montpellier (FR); FILLARD, Jean-Pierre, F-34980 S.-Gely-du-Fesc (FR)
(74) Representative: Davis, Norman Norbridge
(86) International application number: GB9301299
(87) International publication number: WO9400733

(56) References cited:
- GB-A- 2 191 855
- US-A- 4 387 994
- US-A- 4 791 584
- PATENT ABSTRACTS OF JAPAN vol. 16, no. 24 (P-1301)21 January 1992 & JP-A-32 38 309 ( YOKOGAWA ELECTRIC CORP.) 24 October 1991.
- PATENT ABSTRACTS OF JAPAN vol. 14, no. 366 (P-1089)8 August 1990 & JP-A-21 34 543 ( NTT ) 23 May 1990.

## Description

The present invention relates to a method of and apparatus for interferometrically inspecting a surface of an object. It relates more particularly to the submicron metrology of semiconductor surfaces and devices which have multi-micron step features.

The size of the smallest structures in semiconductor components is decreasing by about a factor of two every four years. During the 1990's it is expected that in microelectronics manufacturing the working limit will be well below one micron. For example, in high density circuits such as 4Mb SRAMS and 16Mb DRAMS, the design rules are already 0.5 µm. Means are being sought to make gate lengths of 0.1 µm for silicon MOSFETs (Metal-Oxide-Semiconductor Field Effect Transistors) to increase the operating speed of the transistor.

The ability to make measurements and alignments to some tens of nanometers is therefore becoming increasingly important. Advanced metrology techniques are required capable of measuring near to the nanometer scale, not only for research in the laboratory but also for routine analysis on the production line.

There is now a renewed interest in optical techniques for carrying out submicron measurement because of their ease of use, the very large capacity for handling data and the potential for use on the production line. Despite the resolution of optical microscopes being limited to around 0.5 µm in visible light, with the addition of digital image processing and the clever use of various additional techniques it is now possible to make nanometer detection and measurement. For instance, incoherent broadband illumination techniques combined with image processing to analyse the optical effects of line structures are now capable of giving line width measurement to an accuracy of 10 nm. As an example, Phase Shifting Microscopy (PSM) is a mature technique which is capable of yielding, in the vertical direction, nanometer and even angstrom surface shape analysis, particularly useful in roughness analysis and the contouring of optical components with gentle surface slopes (see K. Creath, "Phase measurement interferometry techniques", Progress in Optics, Ed. E. Wolf, Ch.V, 351-393, Elsevier Science Publishers, 1988). However, it has been found that PSM has certain limitations in semiconductor work, where step heights are normally multi-micron, far greater than the spacing of the interference fringes. Because of the periodicity of the fringes, determination of such step heights introduces problems in phase unwrapping. A convenient solution to these problems does not yet seem to have been found. Further, when working with high numerical aperture objectives and multi-micron step features, there is also the problem of errors introduced by blurring, because the depth of field is smaller than the object being measured.

European patent Publication EP-A-0244781 (KLA, Davidson et al, 1987) describes a technique which is based on white light interferometry. Tilt fringes are used to determine the maximum of the fringe envelope with a standard deviation measurement of a 32 pixel long column "window". Sophisticated data processing is required.

The introduction of Coherent Probe Microscopy, or CPM, (disclosed in European Patent Application No. EP-A-0244781) has provided some particularly interesting solutions for submicron profiling in semiconductors having multi-micron step heights. CPM generates, using incoherent broadband illumination, for a particular location on the surface of a sample object, an interference fringe pattern by stepwise displacement of the object as a whole (and hence the particular location) along the optical axis of an interferometer. At each stepwise displacement, for each location, a value of the coherence function is determined from the variance of the interference fringes. The relative heights of several surface locations are then determined from the relative displacements of the peak values of coherence function for the respective locations. Thus the peak coherence function value is used as a probe which is swept over the object in order to reveal height contours. Use of incoherent broadband illumination removes the problem of fringe periodicity inherent in Phase Shifting Microscopy.

However, CPM suffers from several drawbacks. Firstly, it is computationally time consuming, since a value of the coherence function (which is a complicated function to evaluate) has to be determined for each and every pixel, for each and every stepwise displacement of the object. For a 128 x 128 pixel area and 200 steps, this would require over 3 million calculations of coherence function. For each such calculation, nearly one hundred computation steps are required with the method proposed. Hence it is not surprising that CPM is apparently limited by practical considerations to generating two-dimensional (that is, cross-sectional) images, rather than full three-dimensional images of an object, which would clearly be preferable.

Secondly, because coherence function varies only slowly with displacement near its peak value, the resolution obtainable using the basic CPM technique is relatively modest (in the region of about 70nm).

Finally, CPM has a vast memory requirement. The technique involves the storage of data, used in the determination of coherence function, at each and every pixel and every stepwise displacement of that pixel.

Japanese Patent Application Number 3238309 (SATOSHI, 1991) describes a laser interferometer measurement system which is apparently based on a parallel coherent laser illumination technique which measures changes in the surface.

US Patent 4791584 (GREIVENKAMP, 1988) refers to an improvement in the phase unwrapping algorithm for a phase shifting interferometery technique. This technique extends the vertical range. It also includes a way of sampling a wavefront using a sparse array detector. The method is based on **a priori** knowledge that the surface curvature is continuous, and that the phase is therefore a function having continuous derivatives. The 2π discontinuities present in phase maps can be removed for steeper slopes than was previously possible for certain types of surfaces. It can not be used for high step profiles such as those found in semiconductor components without **a priori** information instead concerning the approximate step height as discussed by J.E. Greivenkamp, K.G. Sullivan and R.J. Pallum, "Resolving Interferometric Step-Height Measurement Ambiguities Using A Priori Information", Optical Engineering, Vol. 30, No. 11, pp 1821-1824 1991.

US Patent 4387994 (BALASUBRAMANIAN, 1983) describes a system which uses a white light interferometer. The maximum value of a fringe envelope is determined with a centroid calculation. A technique of handling the data is described, so that for a given pixel, instead of having to store all the data points (for 500 steps for example), only 5 memories are used to make the summation with mathematical control of each of these memories. The main application is the measurement of aspheric surfaces. The instrument has a vertical range of 100mm and a resolution of 0.025mm.

The paper published in SPIE proceedings Vol. 1775, 1992 by ITOH, TIAN, YATAGIA describes a "White light interferometer for shape measurement with maximum of fringe envelope determined by polynomial fit of fringe peaks". The system and some early results are briefly described in the paper. The instrument described is intended to measure the depth of defects in semiconductor materials.

GB-A-2191855 discloses a method and apparatus for detecting reflection sites wherein a support for the reflecting surface is jittered.

None of the aforementioned documents disclose the arrangement and invention as described below.

The present invention is based on the peak intensity of the zero-order fringe, the processing involved is much simpler than all the other white light interferometer techniques which determine the fringe envelope. Mathematical calculation is kept to a minimum since the peak is determined by a logic comparison of intensities. The other techniques involve calculation of the centroid calculation, measurement of standard deviation and polynomial curve fitting. No a priori knowledge of surface shape is required when using the present invention.

In addition a large depth of focus is obtained. Because the sample is stepped through the "in-focus" plane, all details are sharp for surface relief that is deeper than the depth of focus of the objective, (0.3 µm for a x 100 objective, for example).

A smaller amount of data storage is required. Data processing requirements, when using the present invention, are greatly reduced; requiring only three frame memories and controlled data exchange between memories to build up the image.

The present invention seeks to overcome the aforementioned problems.

According to the present invention, there is provided a method of interferometrically inspecting a surface of an object comprising: a method of interferometrically inspecting a surface Z(x,y) of an object comprising: generating, for a particular location x,y on the surface Z(x,y), an interference pattern in which fringe intensity is a function of displacement dH of the location, determining a value of a property characteristic of the fringe pattern at different positions on the fringe pattern corresponding to different values of the displacement, characterised in that a plurality of measurements are made comprising the steps of: (a) obtaining an initial image Zₙ(x,y) of pixels corresponding to an initial location Hₙ; (b) displacing the location to a new location Hₙ + dH, where a subsequent image Zₙ₊₁(x,y) is obtained; (c) comparing respective values of pixels from images Zₙ(x,y) and Zₙ₊1(x,y), so as to determine an extreme value of the property; and storing the determined extreme value of the property, together with the corresponding displacement value dH; and (d) repeating steps (a), (b) and (c) until sufficient data is obtained for providing an image of the surface Z(x,y).

According to another aspect of the present invention, there is provided apparatus for interferometrically inspecting a surface of an object, comprising apparatus for interferometrically inspecting a surface of an object, comprising means for generating, for a particular location on the surface, an interference fringe pattern in which fringe intensity is a function of displacement dH of the location, and determining means for determining from the fringe pattern the displacement dH of the particular location which corresponds to a selected fringe, characterised in that the determining means is arranged to repetitively obtain images of pixels corresponding to different height values Hₙ, Hₙ + dH, wherein the determining means is further arranged to compare respective values of subsequent images Zₙ(x,y), Zₙ₊1(x,y), so as to determine an extreme value of the property, and means to store the extreme value together with the corresponding height value, so as to provide at the end of the repetitive determination an image of the surface.

The present invention thus uses a selected interference fringe, rather than the peak value of coherence function, as the "probe" to sweep over the object. This can afford several advantages. Firstly, an interference fringe is considerably narrower than the peak of the coherence function, so that the present invention can attain greater resolution (say, 10nm) than can be obtained using CPM (say, 70nm). Secondly, since the position of a fringe is trivial to evaluate by comparison with the peak value of coherence function, the present invention can require considerably less processing time than is required by CPM. For instance, the present invention may possibly require only one computation step for every hundred required by CPM.

The present invention can also afford other advantages over conventional inspection methods. For example, it is believed that the horizontal resolution which can be achieved by the present invention could be somewhat better than that achievable with ordinary reflection imaging. As another example, an image produced by the present invention can always be maintained in focus, regardless of the total depth of the surface features (e.g. 0 to 15 µm) and even when using high magnification objectives which may have a very small depth of focus (e.g. 0.3 µm for x100). This is because the object can be successively stepped through the selected fringe, which can be made always to coincide with the depth of focus.

Preferably, an extreme intensity (maximum or minimum) of the selected fringe is utilised as the probe, since this is a particularly simple position on the fringe pattern to determine.

Preferably, the selected fringe is a fringe of peak contrast. The fringe of peak contrast can provide a unique or nearly unique probe to sweep over the object. This fringe is also easily identifiable. Furthermore, use of this fringe can afford savings in computer storage requirements, as is explained later.

It will be appreciated that the fringe of peak contrast consists of both a light and a dark portion. Any part of either of these portions may be used as the probe, although it is preferable for simplicity to use a point of extreme intensity. It may be preferable to select in advance whether the maximum of the light portion or the minimum of the dark portion is to be used as the probe, in order to avoid confusion between these portions.

It will also be appreciated that greater accuracy and signal/noise ratio could be achieved by selecting a plurality of the fringes as probes. The fact that the fringes are separated bv a fixed known amount (dependent for example on the spectrum of the source used in the interferometer) can yield yet more displacement information.

According to a closely related aspect of the present invention, there is provided a method of interferometrically inspecting a surface of an object, comprising generating, for a particular location on the surface, an interference pattern in which fringe intensity is a function of displacement of the location, and repetitively determining the value of a property characteristic of the fringe pattern at different positions on the fringe pattern, corresponding to different values of the displacement, and storing the current extreme value (maximum or minimum) of the property together with the corresponding displacement value, whereby at the end of the determining step the displacement value corresponding to the extreme value of the property is stored.

According to a further closely related aspect of the present invention, there is provided apparatus for interferometrically inspecting a surface of an object, comprising means for generating, for a particular location on the surface, an interference pattern in which fringe intensity is a function of displacement of the location, and means for repetitively determining the value of a property characteristic of the fringe pattern at different positions on the fringe pattern, corresponding to different values of the displacement; and means for storing the current extreme value (maximum or minimum) of the property, together with the corresponding displacement value, whereby at the end of the determining step the displacement value corresponding to the extreme value of the property is stored.

By storing the current extreme value (conveniently only the current extreme value) of the property together with the corresponding displacement value, rather than storing values of the property at all the different positions on the fringe pattern corresponding to the different values of displacement (as is the case with CPM), memory requirements for the present invention can be very significantly reduced, to the point where three-dimensional imaging becomes practicable.

If, as is preferred, it is desired to evaluate the displacement corresponding to the fringe of peak contrast, the relevant property will be one which is dependent on the local intensity of the fringe pattern.

Preferably, respective interference patterns are generated for a plurality of locations distributed over a region of the surface, and the displacements of the respective locations are determined. That is, the method preferably derives full three-dimensional information about the object, although it could of course be used to derive just two-dimensional (for example, "cross-sectional") information. This can take advantage of the increased speed and reduced memory capacity possible with one or both aspects of the present invention.

Preferably, the interference fringe pattern is generated using a broadband incoherent source. This can afford several advantages. Firstly, accuracy can be improved since the fringe of peak contrast is more easily distinguishable from the other fringes if a broadband source is employed. With a broadband source, the other fringes are higher order fringes which are of lower contrast.

Secondly, because an incoherent source is used, the problems associated with speckle noise and spurious fringes are reduced compared with those arising from the use of a coherent source, for example when inspecting transparent films (such as silicon oxide or resin films commonly present on semi-conductor surfaces).

Thirdly, image sharpness can be improved by using a broadband incoherent source, because of the corresponding reduction in the effects of diffraction at surface edges.

The incoherent source may suitably be a white light source. However, an improvement in horizontal resolution should be obtainable if a light source nearer the ultra-violet end of the spectrum were used, together with a camera sensitive to these wavelengths. It is to be noted that an improvement in horizontal resolution could also be obtained by using a higher numerical aperture objective in the interferometer.

The invention also provides apparatus for inspecting interferometrically the surface of an object analogous to the preferred features of the method described above.

In another closely related aspect, the invention provides a method of and apparatus for interferometrically identifying a specific material, wherein the identity of the material is determined from at least one characteristic of the fringe pattern. This arises from a discovery pursuant to the present invention, and described in more detail later, that various characteristics of the fringe pattern can be used to identify or "fingerprint" specific materials.

A method of identifying a material comprising the steps of establishing an interference pattern using a first and a second beam of light, by reflecting the first beam of light off a surface of the material; observing at least one characteristic of the interference pattern; and comparing information derived from the observed characteristic with stored information on the same characteristic of known materials, such that the material may be identified by matching the observed characteristic with the stored characteristic.

Preferably the method involves observing a variation in the spectrum of the reflected beam.

Alternatively the characteristic is a phase shift in the reflected beam.

A Fourier Transform may be performed on an interference fringe pattern and information concerning the Fourier Transform is used to identify the material.

It will be appreciated that apparatus corresponding to the aforementioned method is also provided within the scope of this aspect of the invention.

This aspect of the invention may be incorporated with the other aspects to provide a measuring apparatus which is simultaneously able to determine what the material is which is being measured.

Preferred features of the invention will now be described by way of example with reference to the accompanying drawings, in which:
Figure 1 is a block diagram of inspection apparatus according to the present invention;
Figure 2 is a schematic representation of an interference microscope employed in the inspection apparatus;
Figure 3 is a plot of fringe intensity against displacement, demonstrating the principle of operation of the invention;
Figures 4, 4a and 5 are sketches demonstrating the principle of operation of the invention;
Figure 6 is a flow diagram of the image processing performed by the present invention;
Figure 7 is a sketch demonstrating the operation of the image processing;
Figures 8a to 8e show results obtained using the present invention to image a groove;
Figures 9a tp 9d show results obtained using the present invention to image a MESFET device; and
Figures 10a and 10b show more detailed images of the MESFET device.

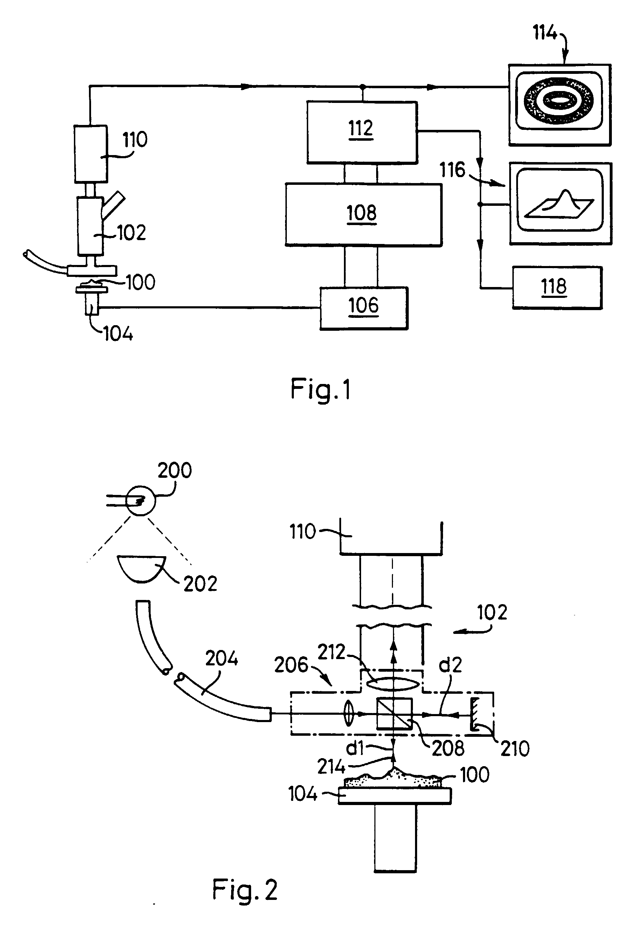

Referring to Figure 1, apparatus for inspecting a surface of an object 100 comprises in general terms a two-beam interference microscope 102, a piezo controlled sample table 104 for displacing the object relative to the microscope, a buffer amplifier 106 for controlling the displacement of the sample table in response to commands from a PC 386 personal computer 108, a Charge Coupled Device (CCD) video camera 110 for receiving images from the microscope 102, a frame grabber 112 controlled by the computer 108, a first video monitor 114 for viewing the output of the camera, a second video monitor 116 for viewing the processed images, and a video printer 118 for making a hard copy of the processed images.

In more detail, referring to Figure 2, the two-beam interference microscope 102 is of the reflection type. A halogen bulb 200 is coupled to transmit white light via a condenser 202 and an optical fibre bundle 204 to an interference objective 206. The interference objective 206 comprises a 50/50 beam splitting cube 208 for splitting the light into two equal waveforms, illuminating a reference mirror 210 and the surface of the object 100. The interference objective is thus configured as a Michelson interferometer. Objective 212 forms an image of the mirror 210 and the object 100 on the target of the camera 110. The path length of the light from the splitting cube 208 to a particular location on the surface of the object 100 is defined as dl, whilst the path length of the light from the cube to the mirror 210 is defined as d2. The sample table 104 displaces the object in steps of height along the optical axis 214 of the interferometer.

It will be appreciated that in using this type of interference microscope there is a need to ensure environmental stability. Thus temperature effects, air currents, and mechanical vibration all need to be carefully controlled.

Instead of the Michelson interferometer, Mirau or Linnik type interferometers could alternatively be employed, or indeed any two-beam interferometer which generates an interference fringe pattern related to the displacement of the object being inspected. For instance, a common-path interferometer would obviate any problems encountered with vibration of the object.

In this particular embodiment of the invention, the sample table 104 can be stepped in displacement (height) under the precise control of a piezo-crystal driver, with a resolution of 3.66nm and a range of 4 096 steps (total 15µm). The displacement is controlled by the computer 108 via the buffer amplifier 106. The piezo-crystal has a strain-gauge detector feedback system to reduce the effect of hysteresis and creep. Since the accuracy of the inspection results depends on the accuracy of the displacement of the table, it may be advantageous to calibrate the displacement of the table using, for example, a method based on fringe counting of He Ne laser fringes.

The frame grabber 112 digitizes the video signal representing an image of the object surface received via the video camera 110 and stores it in one of the four video frames of the frame grabber, each frame consisting of 512 x 512 pixels by 256 grey levels. The frame grabber is controlled by the computer 108 operating at a clockspeed of 33 MHz and running image processing software, as will be described later.

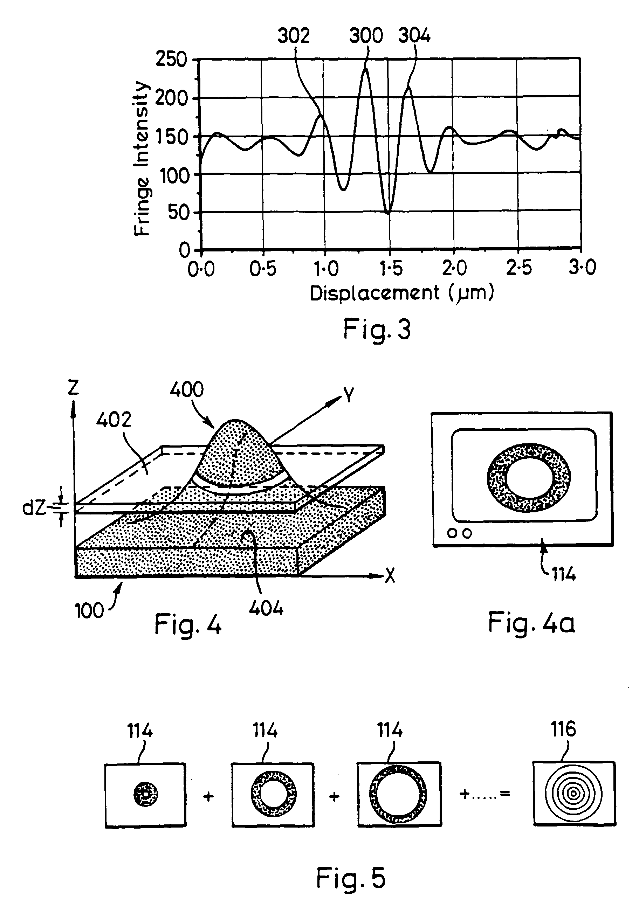

The principle of operation of the invention will now be described with reference to Figures 3 to 5. The interference microscope 102 uses broadband illumination, so that interference takes place when the two path lengths d1 and d2 are equal to within the coherence length of the halogen bulb light source. Coherence length is proportional to the reciprocal of the bandwidth of the light, and is approximately 1µm for the halogen bulb. Thus, as is demonstrated in the plot shown in Figure 3 of fringe intensity versus displacement of a particular location on the object surface, for that particular location the results of the interference of the light can be observed in the image plane as a high contrast zero-order fringe 300 corresponding to zero path length difference (d1 = d2), with coloured maximum and minimum higher order fringes 302 and 304 where the difference between d1 and d2 is non-zero but less than the coherence length. The zero-order fringe, whether the light or (as in the case shown in Figure 3) the dark portion of the fringe is considered, will be the fringe of peak contrast, and uniquely identifies or labels a particular displacement (the zero path length difference) of the location on the object surface. The number and visibility of the fringes, as well as being dependent on the bandwidth of the halogen bulb 200, also depends on the spectral response of the camera 110 (typically 0.4µm to 1.1µm, peaking at about 0.7µm for a silicon target), the spectral reflectivity of the object under inspection, and the properties of the optical elements.

It will be understood that the various points forming the intensity plot of Figure 3 are generated by displacing the object 100 as a whole (and hence the particular location on the object surface) heightwise along the optical axis 214 by stepping the sample table 104, one particular value of displacement of the particular location corresponding to the maximum intensity value of the fringe of peak contrast (the zero-order fringe 300). However, the same interference pattern, giving intensity as a function of displacement of the particular location, could also be obtained by stepping the reference mirror 210, or even by stepping the interference microscope 102 whilst keeping the object 100 stationary.

In providing an image of the object, the present invention isolates the peak of the zero-order fringe in order to use it as an indentifier or probe. This is illustrated in Figure 4. The object 100 is shown as having the shape of a hillock 400. The z-axis is aligned with the optical axis (and is thus the direction in which the object is displaced by the sample table 104), whilst the x- and y-axes are mutually orthogonal axes. At a probe plane 402 corresponding to the zero-order fringe, a single contour of equal height would be viewed on the first video monitor 114. Imaging proceeds by stepping the object on the sample table 104 through the fringe of peak contrast to build up a number of contours and hence form a complete image of the surface of the hillock 400. This is illustrated schematically in Figure 5, in which the second video monitor 116 notionally shows a complete image formed from a number of contours notionally viewed on the first video monitor 114.

The manner in which a three-dimensional image of the object 100 is formed is now described in more detail. The object 100 is positioned on the sample table 104 and displaced until just before the fringe of peak contrast. The object is then stepped successively through the peak fringe typically for up to 255 steps of 5nm to 50nm displacement. At each step an image is taken by the video camera 110. Intensity values at each of, typically, 128 x 128 pixels are determined digitally by the frame grabber 112 and related to the corresponding displacement of the sample table 104. For each pixel the displacement corresponding to the maximum or minimum intensity (peak fringe) is read and stored. In this way, the whole of the depth of the surface detail is sampled to form a complete three-dimensional image. With the apparatus described, measurement over a 256 x 256 pixel area for 100 displacement steps takes just under three minutes.

It has been found that in practice there may be an error in the height (displacement) measurement when measuring differences in height between different materials or different slopes on the same material. This error is thought to be due to differences in reflectivity or other optical properties of the surface or surfaces in question which can alter the position of the fringe of peak contrast. To compensate for this error, the apparatus could be calibrated for different materials and slopes by a calibration factor applied to the peak fringe position.

Further, the optical differences between materials could be used to identify or "fingerprint" specific materials and/or defects (such as foreign matter). It has been found that materials may possess fringe patterns which could be used as unique identifiers of those materials. Important characteristics of the fringe patterns have been found to be the spacings of the various fringes and the relative amplitudes of the various fringes.

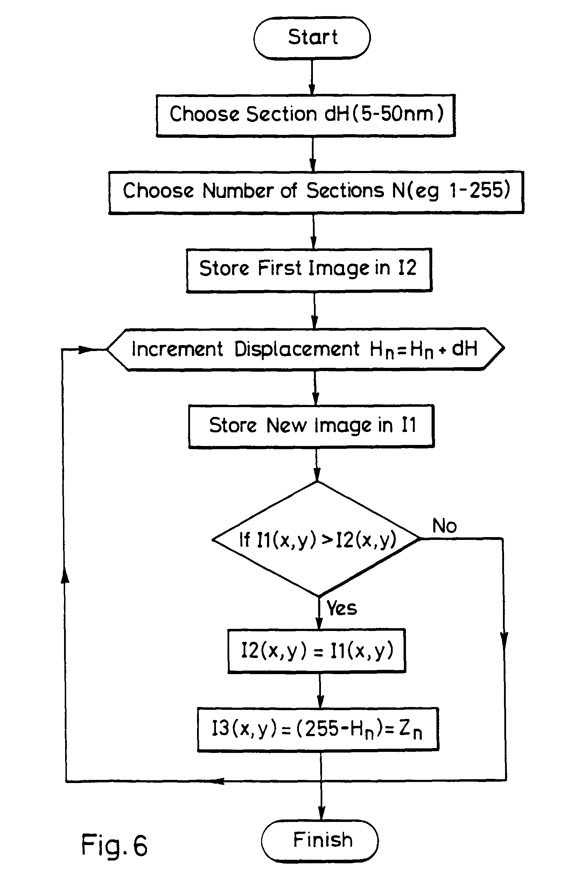

The manner in which image processing is performed by the present invention is now described with reference to the flow diagram shown in Figure 6. In Figure 6, the symbols have the following meanings:-
- dH =: displacement of individual step (e.g. minimum 3.66nm, maximum 50nm)
- N =: total number of steps
- H =: displacement of sample table 104
- n =: step number
- Z =: height of surface of object 100
- I1 =: new image from camera 110
- I2 =: memory of highest pixel intensities
- I3 =: memory of height values Z(x,y)
- x,y =: horizontal and vertical (row and column) coordinates of pixels in the digitized image.

The image processing is relatively simple, being based on a method of comparison rather than involved mathematical calculation or interpolation. This is rendered possible by the fact that the fringe of peak contrast is relatively narrow, so that high resolution can be achieved without such calculation or interpolation (although of course it will be appreciated that better resolution could be achieved by appropriate noise reduction or fringe interpolation techniques). In general terms, the aim of the image processing is to determine at what height Z(x,y) each pixel passes through the fringe of peak contrast. This is achieved by storing the maximum or minimum intensity values and assigning a corresponding image with the appropriate height values determined from H (the displacement of the sample table 104). The maximum or minimum intensity value for each pixel is determined by keeping a store only of successive maximum or minimum values of intensity, together with the corresponding height values, as the object is stepped. At the termination of the stepping procedure the store will thus contain a value of height, for each pixel, corresponding to the extreme of the light or dark portion of the fringe of peak contrast.

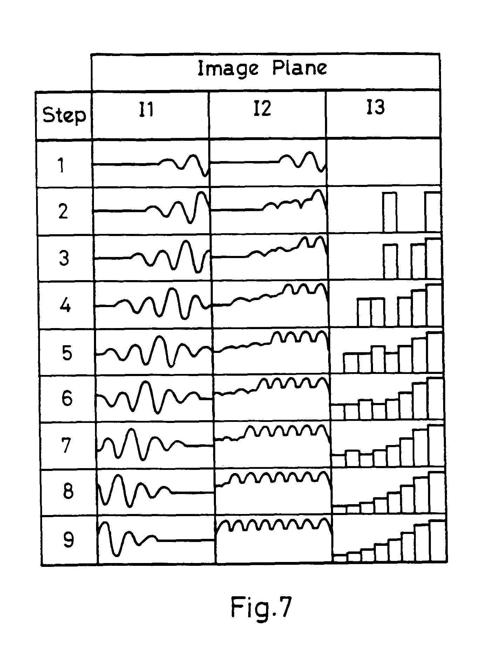

Reference is now made to Figure 7 to demonstrate the operation of the image processing technique. For simplicity, the imaging of a single line of pixels is considered, the line being shaped as the dashed line 404 of Figure 4 (that is, a simple slope). The technique is described by following the successive images in the three image planes I1, I2 and I3.

Step 1: The live image in I1 is copied into I2 to initiate the memory of peak intensity values. It is important that the fringe of peak contrast is not visible in this first image.

Step 2: The displacement is incremented and the zero-order fringe begins to appear on the object as seen in I1. I1 is compared with I2 (that is, the intensities of pixels with equivalent (x,y) coordinates are compared) and, whenever the intensity in I1 is greater than that in I2, (a) the new higher intensity is stored in I2, and (b) the height Zn is stored in I3.

Step 3: The displacement is further incremented and the process repeated N times, I1 each time being compared with I2 of the previous step. In the first few images, the lower intensity side fringes will still be more intense than the average object intensity, causing erroneous height values to be stored in I3. But when the zero-order fringe arrives during the following repetitions, the correct height value will eventually be stored. This will then remain unaltered, as no other fringes will have a higher intensity. Little by little the correct height values are stored, until eventually the complete profile is stored.

Once the basic image data has been obtained, it can be processed further in various ways. For example, the data can be presented in the form of a grey scale image, where height is represented as intensity. Also, the data can be presented as a pseudo three-dimensional wirenet image, or a line profile, or can be investigated using a single pixel pointer. Filtering, zooming and other image processing functions can be provided.

It may be advantageous to use parallel processing techniques to increase the speed of the image processing, although, as has already been mentioned, the image processing is in any case relatively rapid. The speed of the processing is probably limited by the speed at which the object can be mechanically displaced, and the speed of communication between the computer 108 and the frame grabber 112. The latter limitation can be partly obviated by storing image information in the memory of the computer.

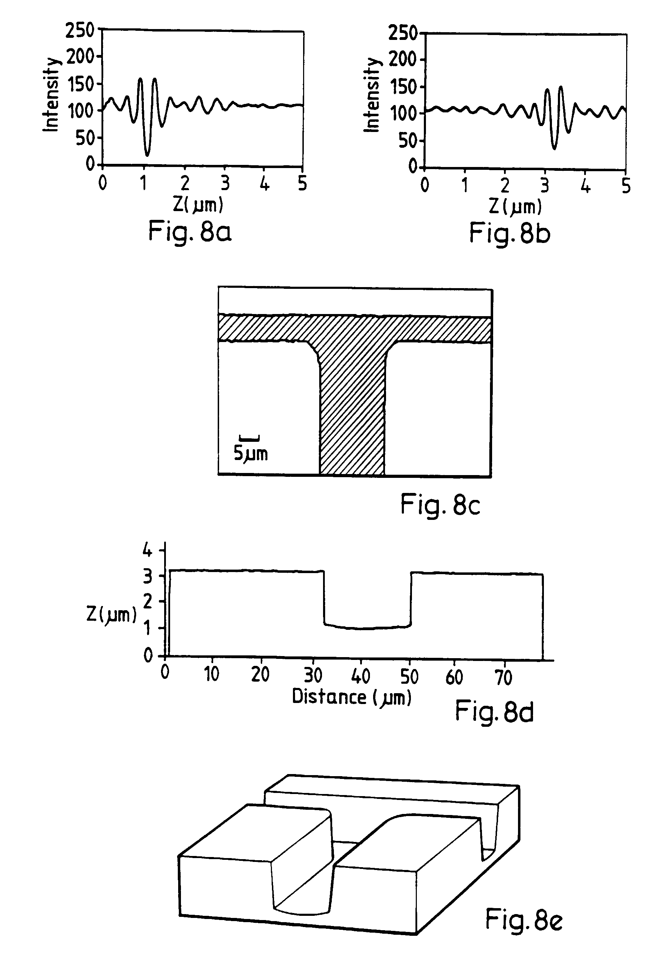

Results which have been obtained using the present invention will now be described with reference to Figures 8 to 10. Referring first to Figures 8a-e, a laser/detector groove etched in InP was profiled utilising the aforementioned techniques, using 200 x 15nm steps. A x 10 objective 212 on the microscope 102 was used with a x2 converter. The intensity profiles of the fringes as a function of Z (displacement) are shown in Figures 8(a) and (b) for the top and bottom of the groove respectively. In this particular case the central dark fringe portion of the peak fringe was utilised. The relative separation of the peaks of the dark fringe portions gives the depth of the groove. A greyscale image, and two- and three-dimensional profiles of a section of the groove are given in Figures 8(c) and (d) respectively.

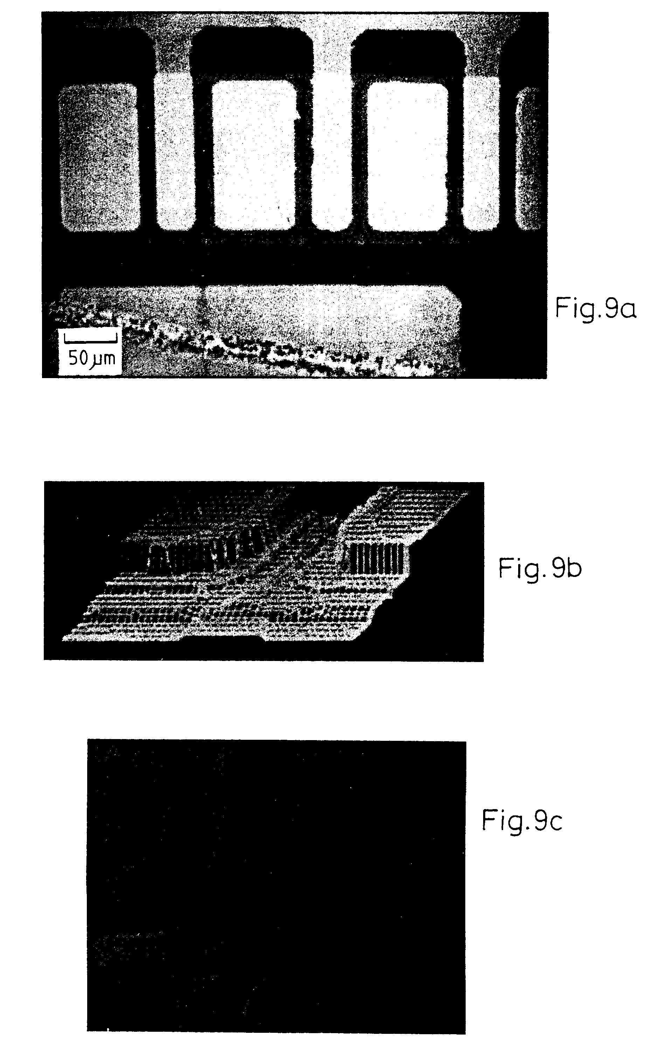

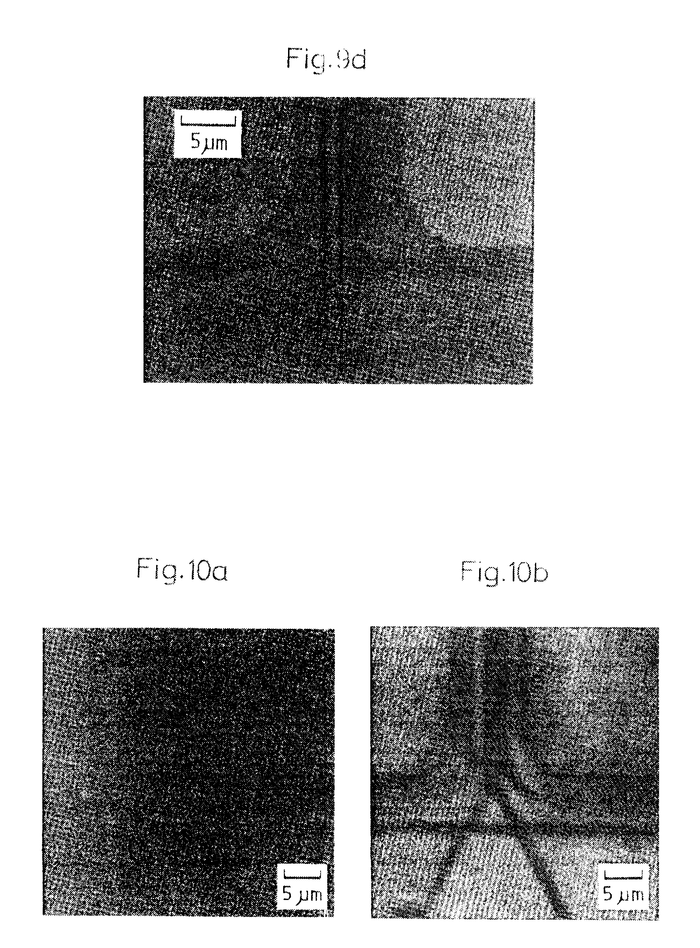

The results of profiling the features of a MESFET device on GaAs are shown in Figures 9. The greyscale image in Figure 9(a), obtained using the present invention, shows (using the x 10 objective) a general view of a number of transistors, with drains, gates and sources. The speckled line at the bottom of the picture is a wire which has not been profiled because it is outside the 15 pm range of the system. A more detailed view of the gate/recess region utilising the present invention (with a x20 objective) is shown in Figures 9(d) as a greyscale image and in Figure 9(b) as a three-dimensional image. For comparison, a photo of the same region from an electron microscope is shown in Figure 9(c). Although the images shown in Figure 9(b) (utilising the present invention) exhibit lower horizontal resolution, they do give dimensional details for the vertical scale, which is an important advantage compared with the SEM image.

Figures 10 show a comparison between on the one hand an ordinary reflection image (Figure 10(a)) of the gate/recess region shown in Figures 9(b) and 9(c) and on the other hand an image of a similar region obtained using the present invention (Figure 10(b)). The offset level of the ordinary image in Figure 10(a) has been increased to match that of the image in Figure 10(b). There is no contrast enhancement using image processing for either image. The image obtained using the present invention is much sharper than the ordinary reflection image, with the advantage that all the features are in focus. This advantage could be exploited in optical inspection (e.g. of defects).

Some potential areas of particular usefulness of the present invention are now discussed. The most obvious uses of the invention are in producing two- or three-dimensional images of objects such as semiconductor devices having multi-micron surface features, and in the metrology of such objects. For instance, the invention could be successfully used to yield high resolution height and linewidth measurements (possibly employing suitable edge locating algorithms). The invention could also be combined with the Phase Shift Microscopy technique in the same basic apparatus. Such a combination would only require some broadening of the fringe envelope (using a spectral filter, for example) to give a vertical resolution as good as 1nm on shallow samples.

Another use for the present invention could be the measurement of key points in an intelligent system. Since semiconductor components often consist of a set of planes, it is not always necessary to measure all the points in an image. Instead, significant points or points of interest on the component could be chosen and measured. With prior knowledge of the approximate heights of these planes on a component, height measurement could be effected with variable resolution at different heights (dependent on the step density). In this manner, processing time could be saved. Another application of the invention is in the measurement of the thickness of thin films.

PFSM is inherently quicker to perform than the techniques using the coherence function because detection of the peak only involves a comparison of intensities. Determination of the coherence function involves a much longer mathematical calculation. PFSM therefore lends itself to "pseudo-real time" operation. For example a sample may be scanned through the fringes, and video frame scanning could be used to sample the sections. This requires data processing at frame rate (for example) 25 frames per second) which could be carried out with an imaging board having a DSP (digital signal processor). For 100 sections a 100 x 100 pixel image may take only 4 seconds. Faster frame rates would lead to faster sectioning.

It is known from previous work that when measuring step heights between different materials, an error correction factor needs to be added to compensate for wavelength dependant optical effects which change. Such a technique could be used to identify a material and information derived by this technique could be incorporated into an apparatus for simultaneous measurement and identification of a specimen. This is explained below.

White light fringes have a well defined form, consisting of a central black and white zero order fringe, and a series of higher order coloured fringes either side. The coloured fringes appear with different intensities in a monochrome image. The overall symmetry and pattern depend principally on the spectral characteristics of the light source. It also depends on the type of material under study. For example, differences in reflectivity between materials will alter the spectral characteristics of one of the interfering beams, altering the form of the fringe pattern. Differences in the material (metal, semiconductor or dielectric) will also introduce wavelength dependant phase errors, again altering the form of the pattern.

Therefore by characterising the fringe pattern from an area on a given material, and calibrating the form of the pattern from different materials it is possible to identify the material. Thus spectroscopy of the surface under investigation can be carried out. One way of quantifying the form of the fringe pattern might be to perform a Fourier transform of the measured function. Using a library of typical transforms characterising different materials, comparing the transform from an unknown surface, the optical characteristics could be determined and the material identified.

Two problems encountered in PFSM measurement are:

Firstly it is difficult to calibrate the piezo stepper and secondly height errors may be induced by external vibrations.

An elegant solution to both these problems is to use a secondary optical measurement system with a higher sampling speed than that of the video system. The important factor is to know the exact distance between the interferometer head and the surface of the sample. For example, a two beam laser interferometer measuring at a point using some form of heterodyne technique to give absolute measurement of distance could be used. This would give a precise measurement of each section taken in the PFSM stepping procedure and eliminate the need for an expensive calibrated piezo stepper (for example using a capacitive sensor). With a high enough sampling rate, feedback control to the piezo could be used to eliminate external vibrations (which can vary from a few nanometers to a micron in amplitude). This would considerably improve the ease of use, for example when aligning the fringes and when working with high power objectives.

Such a solution to the problems of calibration and vibration would introduce significant advantages to such a microscope. The confidence in measurement precision would be increased and the microscope could be built more cheaply and used in a wider variety of situations, for example on a desk top instead of a vibration isolated table.

It will be understood that the invention has been described above purely by way of example, and modifications of detail can be made within the scope of the invention as defined in the appended claims.

## Claims

1. A method of interferometrically inspecting a surface Z(x,y) of an object (100) comprising: generating, for a particular location (x,y) on the surface Z(x,y), an interference pattern in which fringe intensity is a function of displacement dH of the location, determining a value of a property characteristic of the fringe pattern (302 and 304) at different positions on the fringe pattern (302, 304), corresponding to different values of the displacement, characterised in that a plurality of measurements are made comprising the steps of: (a) obtaining an initial image Zₙ(x,y) of pixels corresponding to an initial location Hₙ; (b) displacing the location to a new location Hₙ + dH, where a subsequent image Zₙ₊₁(x,y) is obtained; (c) comparing respective values of pixels from images Zₙ(x,y) and Zₙ₊1(x,y), so as to determine an extreme value of the property; and storing the determined extreme value ofthe property, together with the corresponding displacement value (dH); and (d) repeating steps (a), (b) and (c) until sufficient data is obtained for providing an image (116) of the surface Z(x,y).

2. A method according to Claim 1 wherein the selected fringe is a fringe of peak contrast (300).

3. A method according to Claim 2 wherein the value of a property dependent on the fringe intensity is repetitively determined at different positions Z(x,y) on the fringe pattern, corresponding to different values of the displacement Hₙ, and the current extreme value of the property, together with the corresponding displacement value Hₙ, is stored, whereby at the end of the repetitive determination the displacement value corresponding to a fringe of peak contrast is stored.

4. A method according to any of the preceding claims wherein respective interference patterns are generated for a plurality of locations distributed over a region of the surface, and the displacements dH of the respective locations are determined.

5. A method according to any of the preceding claims wherein the interference fringe pattern is generated using an incoherent source (200).

6. A method according to any of the preceding claims, for interferometrically identifying a specific material (100), wherein the identity of the material is determined from at least one characteristic of the fringe pattern.

7. A method according to Claim 6 wherein the characteristic observed is a spectral variation in the reflected beam.

8. A method according to Claim 6 wherein the characteristic is a phase shift in the reflected beam.

9. A method according to any of Claims 6 to 8 wherein a Fourier Transform is performed on an interference fringe pattern and information concerning the Fourier Transform is used to identify the material.

10. Apparatus for interferometrically inspecting a surface of an object (100), comprising means (200) for generating, for a particular location on the surface, an interference fringe pattern (302, 304) in which fringe intensity is a function of displacement (dH) of the location, and determining means (106, 108, 112, 114 and 116) for determining from the fringe pattern (302, 304) the displacement dH of the particular location which corresponds to a selected fringe, characterised in that the determining means (106, 108, 112, 114 and 116) is arranged to repetitively obtain images of pixels corresponding to different height values Hₙ, Hₙ + dH, wherein the determining means (106, 108, 112, 114 and 116) is further arranged to compare respective values of subsequent images Zₙ(x,y), Zₙ₊1(x,y), so as to determine an extreme value of the property, and to store the extreme value together with the corresponding height value, so as to provide at the end of the repetitive determination an image of the surface.

11. Apparatus according to Claim 10 wherein the selected fringe is a fringe of peak contrast (300).

12. Apparatus according to Claims 10 or 11 wherein the generating means (200) is arranged to generate respective interference patterns (302, 304) for a plurality of locations distributed over a region of the surface, and the determining means (106, 108, 112, 114 and 116) is arranged to determine the displacements of the respective locations.

13. Apparatus according to any of Claims 10 to 12 wherein the generating means is arranged to generate the interference fringe pattern using an incoherent source (200).

14. Apparatus, according to any of Claims 10 to 13, for interferometrically identifying a specific material, wherein the identity of the material is determined from at least one characteristic of the fringe pattern.

15. Apparatus according to any of Claims 10 to 14 comprising means (208,210) for establishing an interference pattern using a first and a second beam of light, by reflecting the first beam of light off a surface of the material (100); means (110) for observing at least one characteristic of the diffraction pattern; and means for comparing information derived from the observed characteristic with stored information on the same characteristic of known materials, such that the material may be identified by matching the observed characteristic with the stored characteristic.

16. Apparatus according to Claim 15 wherein the characteristic observed is a spectral variation in the reflected beam.

17. Apparatus according to Claim 15 wherein the characteristic is a phase shift in the reflected beam.

18. Apparatus according to any of Claims 15 to 17 wherein means is provided to perform a Fourier Transform on an interference fringe pattern and information concerning the Fourier Transform is used to identify the material.

## Patentansprüche

1. Verfahren zum interferometrischen Inspizieren einer Oberfläche Z(x, y) eines Objekts (100) umfassend: Erzeugen, für eine bestimmte Stelle (x, y) auf der Oberfläche Z(x, y), eines Interferenzmusters, bei dem eine Interferenzstreifenintensität eine Funktion einer Verschiebung dH der Stelle ist, Bestimmen eines Wertes einer Eigenschaftscharakteristik des Interferenzstreifenmusters (302 und 304) an verschiedenen Stellen des Interferenzstreifenmusters (302, 304) entsprechend verschiedenen Werten der Verschiebung, dadurch gekennzeichnet, daß mehrere Messungen vorgenommen werden, die die Schritte umfassen: (a) Erhalten eines Anfangsbildes Zₙ(x, y) von Pixeln entsprechend einer Anfangsstelle Hₙ; Verschieben der Stelle zu einer neuen Stelle Hₙ + dH, wo ein folgendes Bild Zₙ₊₁(x, y) erhalten wird; (c) Vergleichen jeweiliger Werte von Pixeln von Bildern Zₙ(x,y) und Zₙ₊₁(x, y), um so einen Extremwert der Eigenschaft zu bestimmen; und Speichern des bestimmten Extremwertes der Eigenschaft, zusammen mit dem entsprechenden Verschiebungswert (dH); und (d) Wiederholen der Schritte (a), (b) und (c), bis genügend Daten erhalten sind, um ein Bild (116) der Oberfläche Z(x, y) zu liefern.

2. Verfahren nach Anspruch 1, bei dem der ausgewählte Interferenzstreifen ein Interferenzstreifen mit Spitzenkontrast (300) ist.

3. Verfahren nach Anspruch 2, bei dem der von der Interferenzstreifenintensität abhängige Wert einer Eigenschaft an verschiedenen Stellen Z(x, y) auf dem Interferenzstreifenmuster periodisch bestimmt wird, entsprechend verschiedenen Werten der Verschiebung Hₙ, und der aktuelle Extremwert der Eigenschaft zusammen mit dem entsprechenden Verschiebungswert Hₙ gespeichert wird, wodurch am Ende der periodischen Bestimmung der einem Interferenzstreifen mit Spitzenkontrast entsprechende Verschiebungswert gespeichert ist.

4. Verfahren nach einem der vorhergehenden Ansprüche, bei dem jeweilige Interferenzmuster für mehrere Stellen erzeugt werden, die über einen Bereich der Oberfläche verteilt sind, und die Verschiebungen dH der jeweiligen Stellen bestimmt werden.

5. Verfahren nach einem der vorhergehenden Ansprüche, bei dem das Interferenzstreifenmuster unter Verwendung einer inkohärenten Quelle (200) erzeugt wird.

6. Verfahren nach einem der vorhergehenden Ansprüche zum interferometrischen Identifizieren eines bestimmten Materials (100), bei dem die Identität des Materials aus zumindest einer Charakteristik des Interferenzstreifenmusters bestimmt wird.

7. Verfahren nach Anspruch 6, bei dem die beobachtete Charakteristik eine spektrale Variation im reflektierten Strahl ist.

8. Verfahren nach Anspruch 6, bei dem die Charakteristik eine Phasenverschiebung im reflektierten Strahl ist.

9. Verfahren nach einem der Ansprüche 6 bis 8, bei dem eine Fourier-Transformation an einem Interferenzstreifenmuster durchgeführt wird und eine die Fourier-Transformation betreffende Information verwendet wird, um das Material zu identifizieren.

10. Gerät zum interferometrischen Inspizieren einer Oberfläche eines Objekts (100) mit einer Einrichtung (200) zum Erzeugen, für eine bestimmte Stelle auf der Oberfläche, eines Interferenzstreifenmusters (302, 304), bei dem eine Interferenzstreifenintensität eine Funktion einer Verschiebung (dH) der Stelle ist, und einer Bestimmungseinrichtung (106, 108, 112, 114 und 116) zum Bestimmen, aus dem Interferenzstreifenmuster (302, 304), der Verschiebung dH der bestimmten Stelle, die einem ausgewählten Interferenzstreifen entspricht, dadurch gekennzeichnet, daß die Bestimmungseinrichtung (106, 108, 112, 114 und 116) angeordnet ist, um periodisch Bilder von Pixeln entsprechend verschiedenen Höhenwerten Hₙ, Hₙ + dH zu erhalten, bei dem die Bestimmungseinrichtung (106, 108, 112, 114 und 116) ferner angeordnet ist, um jeweilige Werte aufeinanderfolgender Bilder Zₙ(x, y), Zₙ₊₁(x, y) zu vergleichen, um so einen Extremwert der Eigenschaft zu bestimmen, und den Extremwert zusammen mit dem entsprechenden Höhenwert zu speichern, um so am Ende der periodischen Bestimmung ein Bild der Oberfläche zu liefern.

11. Gerät nach Anspruch 10, bei dem der ausgewählte Interferenzstreifen ein Interferenzstreifen mit Spitzenkontrast (300) ist.

12. Gerät nach Anspruch 10 oder 11, bei dem die Erzeugungseinrichtung (200) angeordnet ist, um jeweilige Interferenzmuster (302, 304) für mehrere Stellen zu erzeugen, die über einen Bereich der Oberfläche verteilt sind, und die Bestimmungseinrichtung (106, 108, 112, 114 und 116) angeordnet ist, um die Verschiebungen der jeweiligen Stellen zu bestimmen.

13. Gerät nach einem der Ansprüche 10 bis 12, bei dem die Erzeugungseinrichtung angeordnet ist, um das Interferenzstreifenmuster unter Verwendung einer inkohärenten Quelle (200) zu erzeugen.

14. Gerät nach einem der Ansprüche 10 bis 13 zum interferometrischen Identifizieren eines bestimmten Materials, bei dem die Identität des Materials aus zumindest einer Charakteristik des Interferenzstreifenmusters bestimmt wird.

15. Gerät nach einem der Ansprüche 10 bis 14 mit einer Einrichtung (208, 210) zum Einrichten eines Interferenzmusters unter Verwendung eines ersten und zweiten Lichtstrahls, indem der erste Lichtstrahl von einer Oberfläche des Materials (100) reflektiert wird; einer Einrichtung (110) zum Beobachten zumindest einer Charakteristik des Beugungsmusters und einer Einrichtung zum Vergleichen einer aus der beobachteten Charakteristik abgeleiteten Information mit einer gespeicherten Information über die gleiche Charakteristik bekannter Materialien, so daß das Material durch Abgleichen der beobachteten Charakteristik mit der gespeicherten Charakteristik identifiziert werden kann.

16. Gerät nach Anspruch 15, bei dem die beobachtete Charakteristik eine spektrale Variation im reflektierten Strahl ist.

17. Gerät nach Anspruch 15, bei dem die Charakteristik eine Phasenverschiebung im reflektierten Strahl ist.

18. Gerät nach einem der Ansprüche 15 bis 17, bei dem eine Einrichtung vorgesehen ist, um an einem Interferenzstreifenmuster eine Fourier-Transformation durchzuführen, und eine die Fourier-Transformation betreffende Information verwendet wird, um das Material zu identifizieren.

## Revendications

1. Procédé d'inspection par interférométrie d'une surface Z(x, y) d'un objet (100) comprenant : la génération, pour un emplacement particulier (x, y) sur la surface Z(x, y), d'un motif d'interférence dans lequel l'intensité de franges est fonction du déplacement dH de l'emplacement, la détermination d'une valeur de caractéristique de propriété du motif de franges (302 et 304) en différentes positions sur le motif de franges (302, 304), correspondant à des valeurs différentes du déplacement, caractérisé en ce qu'une pluralité de mesures sont faites, comprenant les étapes suivantes : (a) l'obtention d'une image initiale Zₙ(x, y) de pixels correspondant à un emplacement initial Hₙ; (b) le déplacement de l'emplacement à un nouvel emplacement Hₙ + dH, où une image suivante Zₙ₊₁(x, y) est obtenue ; (c) la comparaison de valeurs de pixels respectives à partir d'images Zₙ(x, y) et Zₙ₊₁(x, y), de façon à déterminer une valeur extrême de la propriété ; et la mémorisation de la valeur extrême déterminée de la propriété, avec la valeur de déplacement correspondante (dH) ; et (d) la répétition des étapes (a), (b) et (c) jusqu'à ce que des données suffisantes soient obtenues pour donner une image (116) de la surface Z(x, y).

2. Procédé selon la revendication 1, dans lequel la frange sélectionnée est une frange de contraste de pic (300).

3. Procédé selon la revendication 2, dans lequel la valeur d'une propriété dépendant de l'intensité de franges est déterminée de façon répétitive en différentes positions Z(x, y) sur le motif de franges, correspondant à des valeurs différentes du déplacement Hₙ, et la valeur extrême en cours de la propriété, avec la valeur de déplacement correspondante Hₙ, est mémorisée, grâce à quoi, à la fin de la détermination répétitive, la valeur de déplacement correspondant à une frange de contraste de pic est mémorisée.

4. Procédé selon l'une quelconque des revendications précédentes, dans lequel des motifs d'interférence respectifs sont générés pour une pluralité d'emplacements distribués sur une région de la surface, et les déplacements dH des emplacements respectifs sont déterminés.

5. Procédé selon l'une quelconque des revendications précédentes, dans lequel le motif de franges d'interférence est généré à l'aide d'une source incohérente (200).

6. Procédé selon l'une quelconque des revendications précédentes, pour identifier par interférométrie un matériau spécifique (100), dans lequel l'identité du matériau est déterminée à partir d'au moins une caractéristique du motif de franges.

7. Procédé selon la revendication 6, dans lequel la caractéristique observée est une variation spectrale du faisceau réfléchi.

8. Procédé selon la revendication 6, dans lequel la caractéristique est un déphasage du faisceau réfléchi.

9. Procédé selon l'une quelconque des revendications 6 à 8, dans lequel une transformation de Fourier est effectuée sur un motif de franges d'interférence, et l'information concernant la transformation de Fourier est utilisée pour identifier le matériau.

10. Appareil pour inspecter par interférométrie une surface d'un objet (100), comprenant des moyens (200) pour générer, pour un emplacement particulier sur la surface, un motif de franges d'interférence (302, 304) dans lequel l'intensité de franges est fonction du déplacement (dH) de l'emplacement, et des moyens de détermination (106, 108, 112, 114 et 116) pour déterminer à partir du motif de franges (302, 304) le déplacement dH de l'emplacement particulier qui correspond à une frange sélectionnée, caractérisé en ce que les moyens de détermination (106, 108, 112, 114 et 116) sont configurés de façon à obtenir de façon répétitive des images de pixels correspondant à des valeurs de hauteur différentes Hₙ, Hₙ + dH, dans lequel les moyens de détermination (106, 108, 112, 114 et 116) sont de plus configurés pour comparer des valeurs respectives d'images successives Zₙ(x, y), Zₙ₊₁(x, y), de façon à déterminer une valeur extrême de la propriété, et à mémoriser la valeur extrême avec la valeur de hauteur correspondante, de façon à délivrer à la fin de la détermination répétitive une image de la surface.

11. Appareil selon la revendication 10, dans lequel la frange sélectionnée est une frange de contraste de pic (300).

12. Appareil selon la revendication 10 ou 11, dans lequel les moyens de génération (200) sont configurés de façon à générer des motifs d'interférence respectifs (302, 304) pour une pluralité d'emplacements distribués sur une région de la surface, et les moyens de détermination (106, 108, 112, 114 et 116) sont configurés de façon à déterminer les déplacements des emplacements respectifs.

13. Appareil selon l'une quelconque des revendications 10 à 12, dans lequel des moyens de génération sont configurés de façon à générer le motif de franges d'interférence à l'aide d'une source incohérente (200).

14. Appareil selon l'une quelconque des revendications 10 à 13, pour identifier par interférométrie un matériau spécifique, dans lequel l'identité du matériau est déterminée à partir d'au moins une caractéristique du motif de franges.

15. Appareil selon l'une quelconque des revendications 10 à 14, comprenant des moyens (208, 210) pour établir un motif d'interférence à l'aide d'un premier et d'un deuxième faisceaux de lumière, en réfléchissant le premier faisceau de lumière depuis une surface du matériau (100) ; des moyens (110) pour observer au moins une caractéristique du motif de diffraction ; et des moyens pour comparer l'information dérivée de la caractéristique observée avec l'information mémorisée concernant la même caractéristique de matériaux connus, de telle sorte que le matériau puisse être identifié en faisant correspondre la caractéristique observée avec la caractéristique mémorisée.

16. Appareil selon la revendication 15, dans lequel la caractéristique observée est une variation spectrale du faisceau réfléchi.

17. Appareil selon la revendication 15, dans lequel la caractéristique est un déphasage du faisceau réfléchi.

18. Appareil selon l'une quelconque des revendications 15 à 17, dans lequel des moyens sont présents pour effectuer une transformation de Fourier sur un motif de franges d'interférence et l'information concernant la transformation de Fourier est utilisée pour identifier le matériau.
